# DEMANDE DE BREVET EUROPEEN

(11) **EP 0 625 814 A1**
(43) Date de publication de la demande: **23.11.1994**
(21) Numéro de dépôt: 94410034.6
(22) Date de dépôt: 11.05.1994
(51) Int. Cl.: H02H 1/06, G05F 1/563

(54) **Déclencheur électronique comportant un dispositif de contrôle d'alimentation**

(30) Priorité: 21.05.1993 FR 9306279
(71) Demandeur: SCHNEIDER ELECTRIC SA, F-92100 Boulogne-Billancourt (FR)
(72) Inventeur: Villard, Dominique, F-38050 Grenoble Cedex 09 (FR)
(74) Mandataire: Jouvray, Marie-Andrée

(57) **Abrégé**

Le dispositif de contrôle d'alimentation comporte 2 modes de régulation, une régulation linéaire et une régulation à découpage. Un courant IT1 d'un capteur T1, redressé par des diodes (8, 9, 10, 11) , alimente un circuit d'alimentation comportant un condensateur de stockage (14) et un transistor de régulation (13). Une résistance (21) et un circuit (22) de contrôle mesurent la valeur du courant et sélectionnent à travers un sélecteur (23) le mode de régulation. Si le courant est inférieur à un seuil prédéterminé la régulation est linéaire, la base du transistor (13) est reliée à une diode Zener (19). Lorsque le courant dépasse un seuil prédéterminé la régulation est à découpage et la base du transistor (13) est reliée à la sortie d'un comparateur (16).

## Description

L'invention concerne un déclencheur électronique pour disjoncteur de protection d'un réseau électrique comportant :
- un capteur de courant par pôle fournissant un courant secondaire proportionnel à un courant parcourant un conducteur associé du réseau protégé par le disjoncteur,
- un ensemble électronique de traitement recevant les signaux fournis par les capteurs, et délivrant un ordre de déclenchement, avec ou sans retard, lorsque les courants parcourant les conducteurs à protéger dépassent des seuils de déclenchement prédéterminés,
- un circuit d'alimentation fournissant l'alimentation électrique des circuits électriques du déclencheur et d'un relais de déclenchement, et comportant des moyens de régulation à découpage.

Les déclencheurs électroniques de types connus comportent des circuits d'alimentation pour fournir l'alimentation électrique des circuits électroniques de l'ensemble de traitement, et l'énergie nécessaire à la commande d'un relais de déclenchement. Dans la plupart des déclencheurs, la tension de fonctionnement des circuits électroniques et la tension de commande du relais de déclenchement sont différentes. Les tensions d'alimentation des circuits électroniques sont compatibles avec les tensions de fonctionnement des circuits intégrés numériques, de l'ordre de 5 V et régulées de manière précise. L'énergie nécessaire à la commande du relais doit être compatible avec le courant délivré par les capteurs et la tension d'ouverture qu'ils peuvent supporter sans perturber le courant. Cette tension se situe généralement entre 9 V et 25 V, et le déclencheur doit pouvoir fonctionner avec un courant minimum de 10 à 20 mA. Comme le courant de commande du relais est supérieur au courant minimum fourni par les capteurs, un condensateur de découplage permet de stocker l'énergie de commande du relais. Le courant des capteurs charge alors le condensateur jusqu'à la tension de commande du relais et, lorsque un ordre de déclenchement est appliqué au relais, le condensateur se décharge rapidement dans le relais avec un fort courant généralement supérieur au courant des capteurs. La régulation de cette tension de commande est réalisée de manière connue par une régulation linéaire qui limite la tension et absorbe le courant des capteurs, ou par une régulation à découpage. Dans la régulation à découpage le courant des capteurs charge le condensateur de stockage, puis, lorsque la tension de charge dépasse un seuil prédéterminé, un circuit de régulation commande la saturation d'un transistor pour dériver le courant et arrêter la charge. Les cycles de découpage de l'alimentation, correspondant à l'ouverture et à la fermeture du transistor, peuvent être libres ou fixes avec un rapport cyclique variable.

La régulation linéaire limite la tension de commande et absorbe le courant des capteurs sous cette tension. Avec ce mode de régulation, la puissance absorbée devient très élevée lorsque le courant augmente. La régulation à découpage évite un échauffement excessif car la tension présente dans les moyens de découpage au moment de la circulation du courant des capteurs est faible. Cependant, pour de faibles courants en sortie des capteurs, les variations de la tension dues au découpage perturbent le fonctionnement des capteurs et altèrent la forme du courant. Ces perturbations ont un effet sur le comportement du déclencheur puisque les courants des capteurs sont utilisés pour les fonctions de déclenchement.

L'invention a pour but un dispositif d'alimentation pour déclencheur qui limite les perturbations et évite une dissipation de puissance importante.

Selon l'invention, le circuit d'alimentation comporte des moyens de régulation linéaire, des moyens de comparaison du courant d'au moins un des capteurs à un seuil de régulation prédéterminé, contrôlant des moyens de sélection permettant le passage de la régulation linéaire à la régulation à découpage lorsque le courant d'au moins un des capteurs dépasse ledit seuil de régulation prédéterminé.

Selon un mode particulier de réalisation, le circuit d'alimentation passe de la régulation linéaire à la régulation à découpage lorsque la somme des courants secondaires des capteurs dépasse un seuil prédéterminé.

Selon un développement des modes de réalisation, les moyens de comparaison sont des moyens de comparaison à Hystérésis.

Selon un développement de l'invention, les moyens de comparaison et les moyens de sélection sélectionnent une régulation à découpage lorsque le courant des capteurs dépasse un seuil prédéterminé, et lorsque la régulation est restée pendant un premier temps prédéterminé en régulation linéaire, et sélectionnent une régulation linéaire lorsque le courant des capteurs devient inférieur à un seuil prédéterminé, et lorsque la régulation est restée pendant un second temps prédéterminé en régulation à découpage.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

La figure 1 représente un schéma-bloc simplifié d'un disjoncteur dans lequel un déclencheur comportant l'invention peut être mis en oeuvre.

La figure 2 représente un schéma d'un déclencheur selon un mode de réalisation de l'invention.

La figure 3 illustre sur des courbes, 3a à 3d, divers signaux de courant et de tension dans un déclencheur selon la figure 2.

La figure 4 représente un schéma d'un autre mode de réalisation de l'invention.

La figure 5 représente un organigramme simplifié d'un contrôle de régulation selon un mode de réalisation programmé.

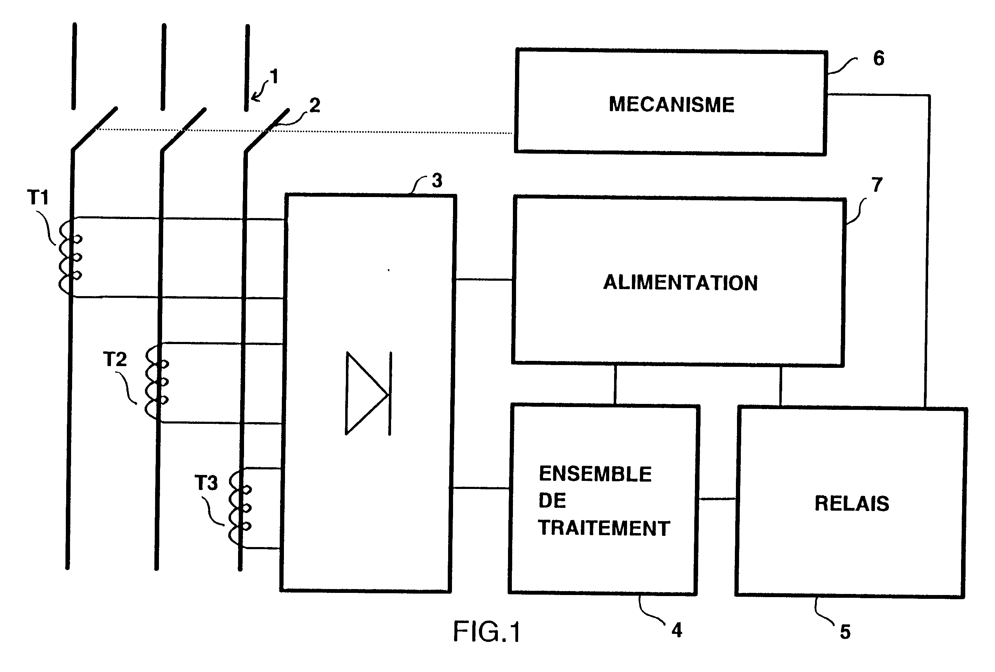

La figure 1 représente un disjoncteur de type connu. Un réseau électrique 1 à protéger est composé de conducteurs électriques connectés à des contacts 2 permettant d'établir ou d'interrompre le courant. Des capteurs de courant T1, T2, T3 associés aux différents conducteurs du réseau transforment les courants primaires de forte valeur en courants secondaires compatibles avec les déclencheurs électroniques. Les courants secondaires sont appliqués à l'entrée d'un circuit 3 de redressement et de détection. Ce circuit fournit des signaux représentatifs des courants à un ensemble électronique de traitement 4 et un courant d'alimentation à un circuit d'alimentation 7 du déclencheur. Un ordre de déclenchement produit par l'ensemble de traitement 4 est appliqué à l'entrée d'un relais de commande 5 qui actionne un mécanisme 6 d'ouverture des contacts 2 du disjoncteur. Le circuit d'alimentation 7 alimente l'ensemble de traitement avec une tension régulée de l'ordre de 5 V, et fournit une tension de valeur plus élevée pour la commande du relais 5.

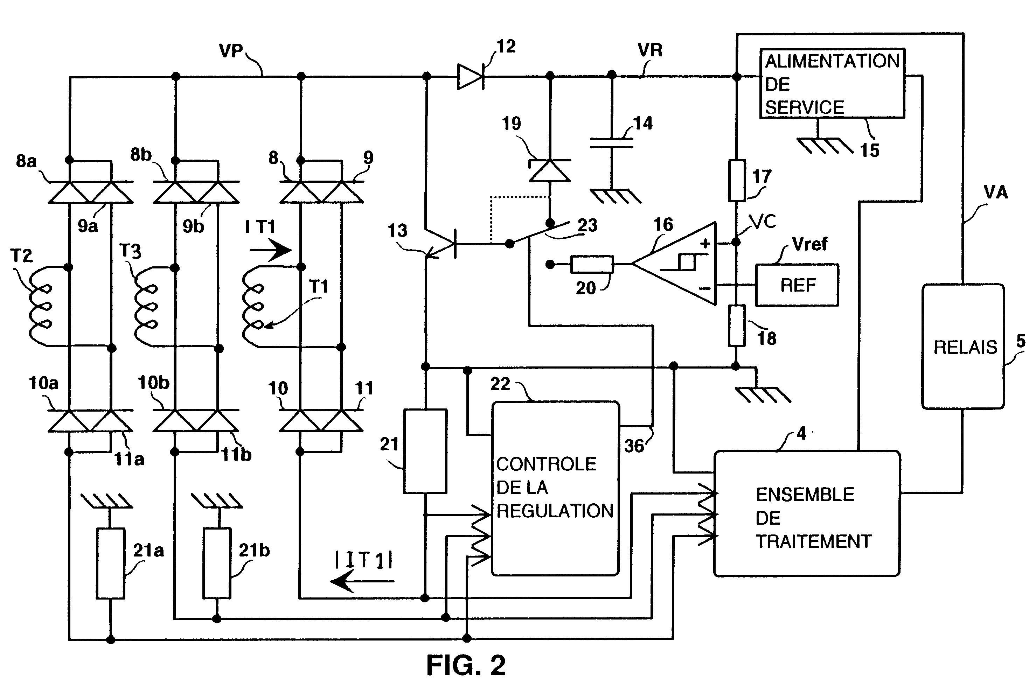

Le schéma d'un déclencheur selon un mode de réalisation particulier de l'invention, est représenté à la figure 2. L'enroulement secondaire du capteur de courant T1 est connecté à un pont redresseur constitué par un groupe de quatre diodes 8 à 11. Une première extrémité de l'enroulement secondaire est connectée à l'anode d'une première diode 8 et à la cathode d'une seconde diode 10, tandis qu'une seconde extrémité de l'enroulement secondaire est connectée à l'anode d'une troisième diode 9 et à la cathode d'une quatrième diode 11. Les cathodes des première et troisième diodes, 8 et 9, sont connectées à une ligne d'alimentation positive VP. Les anodes des secondes et quatrième diodes, 10 et 11, sont connectées à une première borne d'une résistance de mesure 21. L'autre borne de la résistance de mesure est connectée à une masse de référence électrique du déclencheur. Les autres capteurs T2 et T3 sont connectés de la même manière à deux ponts redresseurs, représentés respectivement par des diodes 8a, 9a, 10 a, 11a et 8b, 9b, 10b et 11b. Les cathodes des diodes 8a,b et 9a,b sont reliées à la ligne VP. Deux résistances R21a et R21b de mesure sont connectées respectivement entre les anodes des diodes 10a et 11a et la masse, et entre les anodes des diodes 10b et 11b et la masse.

Un transistor 13 de régulation a son collecteur connecté à la ligne positive VP, son émetteur à la masse, et reçoit sur sa base des commandes de régulation. Une diode 12, connectée par son anode à la ligne VP et par sa cathode à une ligne VR, permet la charge d'un condensateur 14 de stockage connecté entre la ligne VR et la masse. Un sélecteur 23 de régulation, connecté à la base du transistor 13, permet le passage d'une régulation linéaire à une régulation à découpage. La commande du sélecteur 23 est fournie par un circuit 22 de contrôle de la régulation, connecté en parallèle sur les résistances 21, 21a et 21b de mesure du courant des capteurs. La régulation linéaire est réalisée au moyen d'une diode zener 19 connectée par sa cathode à la ligne VR et par son anode à une première entrée du sélecteur 23 de régulation. La régulation à découpage est réalisée au moyen d'un comparateur 16 pouvant comporter un cycle d'hystérésis. La sortie du comparateur 16 est reliée à une seconde entrée du sélecteur 23 par l'intermédiaire d'une résistance 20. Une première entrée du comparateur 16 reçoit une tension de référence Vref, et une deuxième entrée reçoit une valeur représentative de la tension de la ligne VR. Sur la figure 2, la valeur VC représentative de la tension de la ligne VR est obtenue au point commun à deux résistances 17 et 18 connectées en série entre la ligne VR et la masse.

L'ensemble de traitement 4 reçoit en entrée des valeurs représentatives des courants mesurés sur les résistances 21, 21a et 21b, et fournit un ordre de déclenchement au relais 5 lorsque les courants dépassent des seuils prédéterminés pendant un temps prédéterminé. Le relais 5 est alimenté directement par la tension VR qui peut être de l'ordre de 9 à 25 V. Un circuit 15 de régulation fournit une tension de service, de l'ordre de 5 V, pour le fonctionnement des circuits électroniques du déclencheur, notamment de l'ensemble de traitement 4.

Lorsqu'un courant positif IT1 est généré dans le secondaire du capteur T1, il passe par la diode 8. Puis sur la ligne VP une partie du courant passe par la diode 12 pour alimenter le déclencheur et une autre partie passe par le transistor 13. Sur la ligne de masse tous les courants sont récupérés et le courant IT1 traverse la résistance de mesure 21 pour revenir au capteur T1 par l'intermédiaire de la diode 11. La régulation linéaire est assurée par le transistor 13 et la diode zener 19 qui constituent un limiteur de tension lorsque la base de 13 est reliée à la diode 19. Tant que la tension entre la ligne VR et la masse est inférieure à la tension inverse de conduction de la diode zener 19, le courant IT1 charge le condensateur 14. Dès que la diode zener 19 commence à conduire, le transistor 13 devient conducteur, une partie du courant IT1 passe par le transistor 13 et la tension VR est limitée à une valeur sensiblement égale à la valeur de la tension de conduction de la diode zener. La tension VP entre le collecteur et l'émetteur du transistor 13 est légèrement supérieure à la tension VR, et la puissance dissipée par le transistor peut être très élevée si le courant augmente.

La régulation à découpage est réalisée par le comparateur 16 les résistances 17, 18, 20 et le transistor 13, lorsque le sélecteur 23 connecte la base du transistor et la sortie du comparateur 16. Si la tension VC représentative de VR est inférieure à la valeur fournie par la référence de tension Vref, la sortie du comparateur est dans un état bas et le transistor est bloqué. Le courant IT1 passe par la diode 12 et charge le condensateur 14. Les tensions VR et VC croîssent jusqu'à ce que la tension VC dépasse la tension de référence Vref. La sortie du comparateur passe alors dans un état haut et commande le transistor en saturation. La tension VP passe alors d'une valeur de tension élevée à une tension presque nulle, tout le courant IT1 passe par le transistor 13 et le condensateur se décharge lentement dans le circuit 15 pour alimenter le circuit 4 de traitement. Dès que la tension Vc passe au-dessous de la valeur de référence, le transistor se bloque et le cycle recommence.

Selon ce mode de réalisation le circuit 22 positionne le sélecteur 23 en fonction du courant qui circule dans la résistance 21. Lorsque le courant est inférieur à un seuil prédéterminé, le circuit 22 commande, par l'intermédiaire d'une ligne 36, le passage du sélecteur 23 dans la position de régulation linéaire, la base du transistor 13 étant connectée à la diode zener 19. Si le courant dépasse le seuil prédéterminé, le circuit 22 commute le sélecteur dans la position de régulation à découpage, la base du transistor 13 étant connectée à la sortie du comparateur 16, de manière à limiter la puissance dissipée par le transistor 13.

Dans ce mode de réalisation, si la tension VP lors d'une régulation linéaire est supérieure à la tension VP lors d'une régulation à découpage, la diode zener 19 peut rester connectée en permanence à la base du transistor 13 sans que cela perturbe le fonctionnement de la régulation à découpage.

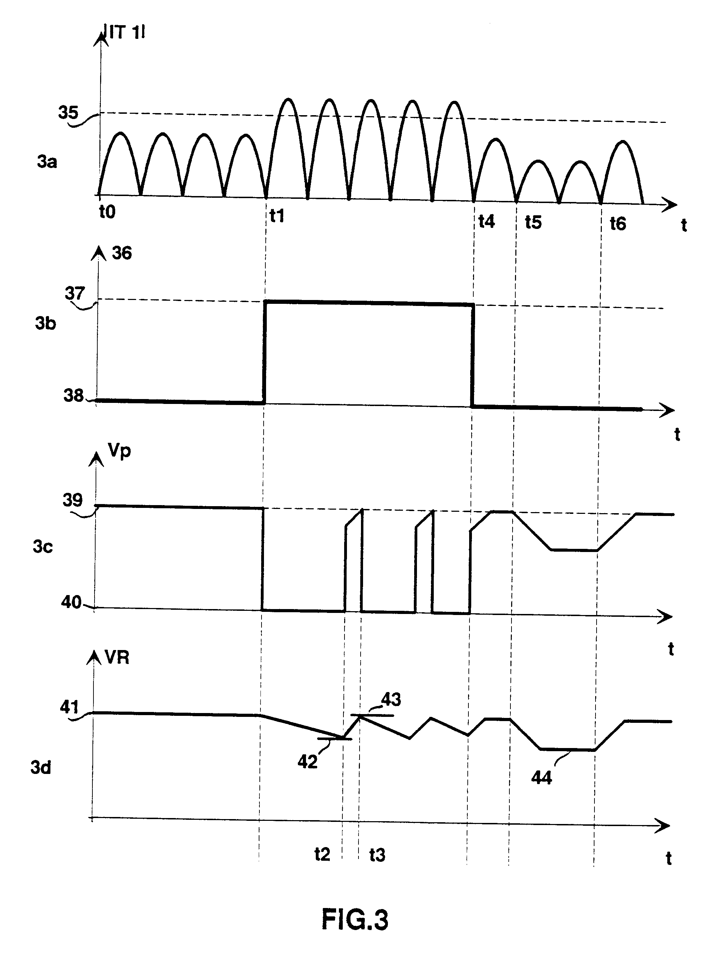

La figure 3 représente les signaux de courant et de tension d'un déclencheur selon le mode de réalisation de la figure 2. La courbe 3a montre un courant redressé |IT1| représentatif du courant fourni par le capteur T1. La courbe 3b illustre la valeur du signal de sélection fourni sur la ligne 36 par le circuit de contrôle 22. La tension VP, au collecteur du transistor 13, et la tension VR aux bornes du condensateur 14, sont représentées respectivement sur les courbes 3c et 3d.

Entre les instants t0 et t1 le courant |IT1| est inférieur à un seuil prédéterminé 35. Le signal 36 prend alors une première valeur 38 représentative d'un positionnement du sélecteur dans la position correspondant à la régulation linéaire, les tensions VP et VR ont des valeurs respectivement 39 et 41, sensiblement égales à celle de la diode zener 19.

Entre les instants t1 et t4 la valeur du courant est supérieure au seuil 35. Dans ce mode de réalisation, la comparaison du courant au seuil 35 peut se faire aussi bien en valeur crête, en valeur efficace ou en valeur moyenne. Le signal 36 passe alors à une seconde valeur 37 représentative d'un positionnement du sélecteur dans la position correspondant à la régulation à découpage, la tension VP aux bornes du transistor 13 est découpée. Elle oscille entre une valeur haute sensiblement égale à la tension VR de charge du condensateur 14 et une valeur 40 sensiblement nulle. La tension VR peut varier suivant le taux de l'hystérésis du comparateur 16 entre une valeur minimum 42 et une valeur maximum 43. Entre les instants t1 et t2, le transistor 13 est saturé et la tension VR décroît jusqu'à la valeur minimum 42. Ensuite, entre les instants t2 et t3, le transistor est bloqué, le courant charge le condensateur 14 et la tension VR croît jusqu'à la valeur maximum 43.

Après l'instant t4, le courant IT1 redevient inférieur au seuil 35, le signal 36 prend la valeur 38 correspondant à une régulation linéaire, et les tensions VP et VR redeviennent stables.

Si comme entre les instants t5 et t6 le courant IT1 baisse de façon importante, les tensions VP et VR baissent également et se retrouvent à une valeur 44 inférieure aux niveaux de limitation 39 ou 41.

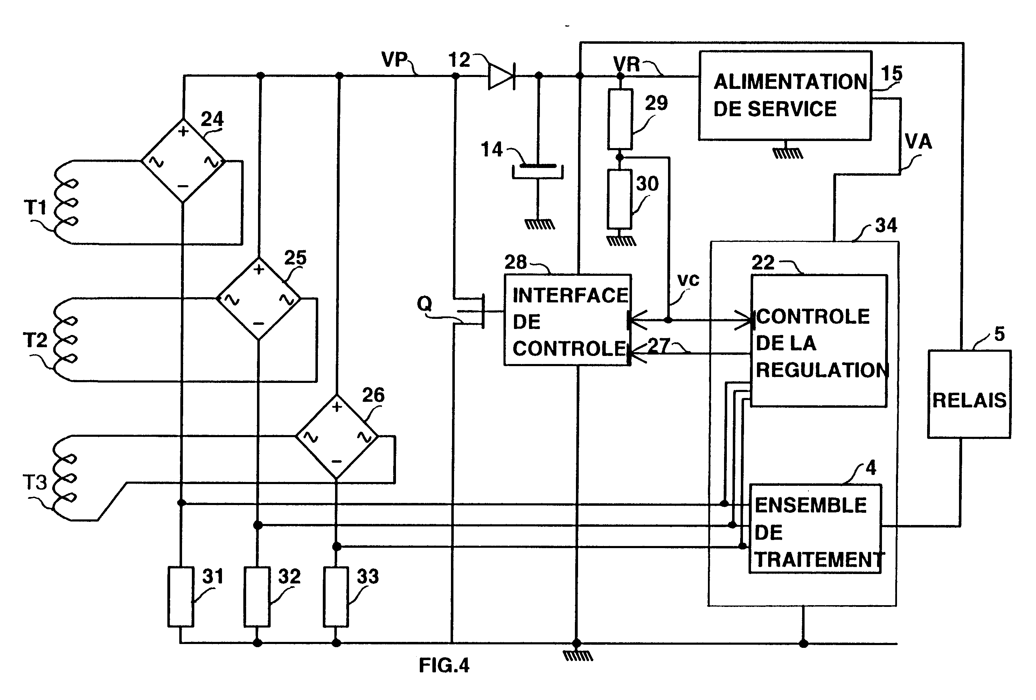

La figure 4 illustre un autre mode de réalisation. Les trois enroulements secondaires de trois capteurs T1, T2, et T3 sont connectés à des entrées alternatives de trois redresseurs, respectivement 24, 25 et 26. Les sorties positives de ces ponts sont reliées à la ligne VP et leurs sorties négatives sont connectées à des premières extrémités de trois résistances de mesure respectivement 31, 32, 33. Les autres extrémités des résistances sont connectées à une masse électrique du déclencheur. Un transistor Q est connecté par son drain à la ligne VP, par sa source à la masse, et sa grille est commandée par un circuit d'interface de contrôle 28. La diode 12 connectée entre la ligne VP et la ligne VR conduit le courant de charge du condensateur de stockage 14 et le courant d'alimentation du déclencheur. La mesure des courants des capteurs est effectuée sur les résistances de mesure 31, 32 et 33. Les valeurs des courants sont fournies à un circuit 34 comportant un ensemble 4 de traitement et un ensemble 22 de contrôle de la régulation. Comme sur la figure 2, le circuit de régulation 15 fournit la tension d'alimentation de service VA pour le fonctionnement des circuits électroniques du déclencheur. La tension VR est appliquée directement au relais 5 qui est commandé par un ordre de déclenchement provenant de l'ensemble 4.

Le circuit 28 d'interface contrôle la commande du transistor Q pour la régulation linéaire ou la régulation à découpage. Un pont de résistances 29 et 30, connectées en série entre la ligne VR et la masse, fournit la tension VC représentative de la tension VR à réguler. Cette tension est appliquée au circuit 28 d'interface et au circuit 22 de contrôle de la régulation. Dans ce mode de réalisation certains des composants réalisant la régulation linéaire peuvent être intégrés au circuit d'interface 28, et certains des moyens de régulation à découpage peuvent faire partie de l'ensemble 22 de contrôle de la régulation sous une forme programmée. L'ensemble 22, recevant les valeurs des courants des capteurs, détermine si au moins une des valeurs des courants dépasse un seuil prédéterminé, et indique par la ligne 27 au circuit d'interface si la régulation est linéaire ou à découpage. La valeur de la tension VC, représentative de la tension à réguler VR, est comparée dans l'ensemble 22 à un seuil de régulation. Pendant la régulation à découpage, si la tension est inférieure au seuil de régulation, l'ensemble 22 commande l'ouverture du transistor Q à travers la ligne 27 et le circuit d'interface 28. Lorsque la tension Vc devient supérieure au seuil de régulation, une commande de fermeture du transistor Q est produite par l'ensemble 22.

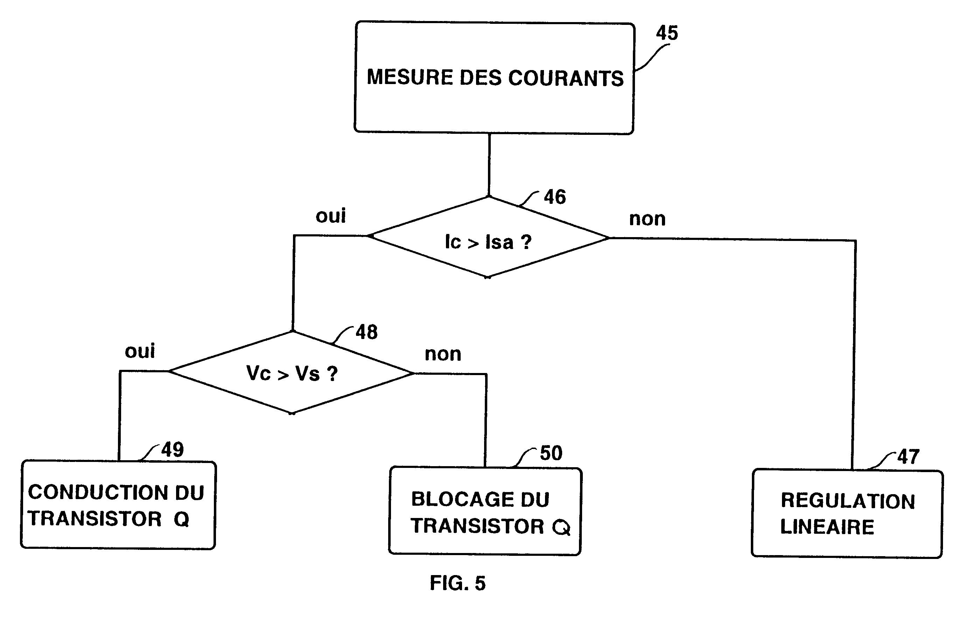

Un organigramme de la régulation, traité par l'ensemble 22, est représenté à la figure 5. Les courants des capteurs sont mesurés à une étape 45. Une comparaison entre une valeur Ic représentative des courants mesurés, par exemple la valeur correspondant au courant maximum dans les capteurs, et un seuil ISA prédéterminé, est réalisée par une étape 46. Si la valeur Ic est inférieure au seuil ISA l'ensemble 22 positionne le circuit d'interface 28 en régulation linéaire à l'étape 47. Lorsque la valeur de Ic est supérieure au seuil ISA une étape 48 contrôle la tension VR à réguler. Si la valeur Vc, représentative de la tension VR, est supérieure à un seuil de régulation de tension Vs, l'ensemble 22 commande la conduction du transistor Q à l'étape 49. Dans le cas contraire, l'ensemble 22 commande le blocage du transistor Q à l'étape 50.

Pour une plus grande sécurité dans le passage d'un état de fonctionnement à un autre, les seuils prédéterminés de courant (ISA) et de tension (VS) peuvent avoir un cycle d'hystérésis. Les seuils ont alors des valeurs différentes si les valeurs de Ic ou Vc, avant comparaison, sont supérieures ou inférieures aux seuils.

Dans les modes de réalisation, décrits ci-dessus, la valeur de courant prise en compte pour être comparée à un seuil prédéterminé, est la valeur du courant d'un capteur IT1 ou une valeur Ic représentative des courants des trois capteurs. Cette valeur Ic peut correspondre à la valeur maximale des courants des capteurs, à la somme des courants des capteurs ou à toute autre combinaison des courants, par exemple, si au moins les courants de deux capteurs dépassent un seuil prédéterminé.

Pour une plus grande stabilité de fonctionnement, la régulation peut rester dans un mode linéaire ou à découpage pendant un temps minimum prédéterminé, avant de pouvoir changer de mode de régulation. Les moyens de réalisation de la régulation peuvent être des composants analogiques indépendants ou groupés dans un circuit intégré. Mais dans des déclencheurs à circuits numériques comportant des microprocesseurs, le contrôle de la régulation et le traitement de la commande du transistor de régulation peuvent être intégrés dans le programme de l'ensemble du traitement.

## Revendications

1. Déclencheur électronique pour disjoncteur de protection d'un réseau électrique comportant :
- un capteur de courant par pôle fournissant un courant secondaire proportionnel à un courant parcourant un conducteur associé du réseau (1) protégé par le disjoncteur,
- un ensemble électronique de traitement (4) recevant les signaux fournis par les capteurs, et délivrant un ordre de déclenchement, avec ou sans retard, lorsque les courants parcourant les conducteurs à protéger dépassent des seuils de déclenchement prédéterminés,
- un circuit d'alimentation (7) fournissant l'alimentation électrique des circuits électriques du déclencheur et d'un relais (5) de déclenchement, et comportant des moyens de régulation à découpage (16, 13, 28, Q),
déclencheur caractérisé en ce que le circuit d'alimentation comporte des moyens (19, 13, 28, Q) de régulation linéaire, des moyens (22) de comparaison du courant d'au moins un des capteurs à un seuil de régulation prédéterminé, contrôlant des moyens (23, 28) de sélection permettant le passage de la régulation linéaire à la régulation à découpage lorsque le courant d'au moins un des capteurs dépasse ledit seuil de régulation prédéterminé.

2. Déclencheur selon la revendication 1, caractérisé en ce que le circuit d'alimentation passe de la régulation linéaire à la régulation à découpage lorsque la somme des courants secondaires des capteurs dépasse un seuil prédéterminé.

3. Déclencheur selon l'une des revendications 1 et 2, caractérisé en ce que les moyens de comparaison (22) sont des moyens de comparaison à Hystérésis.

4. Déclencheur selon l'une quelconque des revendications 1 à 3, caractérisé en ce que les moyens de comparaison et les moyens de sélection sélectionnent une régulation à découpage lorsque le courant des capteurs dépasse un seuil prédéterminé, et lorsque la régulation est restée pendant un premier temps prédéterminé en régulation linéaire, et sélectionnent une régulation linéaire lorsque le courant des capteurs devient inférieur à un seuil prédéterminé et lorsque la régulation est restée pendant un second temps prédéterminé en régulation à découpage.
